# EUROPÄISCHE PATENTSCHRIFT

(11) **EP 2 051 889 B1**
(45) Veröffentlichungstag und Bekanntmachung des Hinweises auf die Patenterteilung: **06.04.2016**
(21) Anmeldenummer: 07788065.6
(22) Anmeldetag: 31.07.2007
(51) Int. Cl.: B60T 13/74, B60T 7/10

(54) **ELEKTROMECHANISCH BETÄTIGBAREN FESTSTELLBREMSE UND VERFAHREN ZUM BETRIEB EINER ELEKTROMECHANISCH BETÄTIGBAREN FESTSTELLBREMSE**
ELECTROMECHANICALLY OPERABLE PARKING BRAKE AND METHOD FOR THE OPERATION OF AN ELECTROMECHANICALLY OPERABLE PARKING BRAKE
FREIN À MAIN ACTIONNABLE DE MANIÈRE ÉLECTROMÉCANIQUE ET PROCÉDÉ D'ACTIONNEMENT D'UN FREIN À MAIN ACTIONNABLE DE MANIÈRE ÉLECTROMÉCANIQUE

(30) Priorität: 07.08.2006 DE 102006037100; 07.08.2006 DE 102006037098
(43) Veröffentlichungstag der Anmeldung: 29.04.2009
(73) Patentinhaber: Continental Teves AG & Co. OHG, 60488 Frankfurt (DE)
(72) Erfinder: BAUER, Oleg, 35396 Giessen (DE); MARON, Christof, 65779 Kelkheim (DE); VÖLKEL, Jürgen, 60389 Frankfurt/M. (DE); NEITZEL, Bernd, 63263 Neu-Isenburg (DE); KLUSEMANN, Rainer, 60529 Frankfurt/M. (DE); BÜSE, Axel, 61440 Oberursel (DE); KOHL, Andreas, 55126 Mainz (DE); ATTAYEBI, Samir, 60326 Frankfurt/M. (DE); BAUER, Thomas, 60489 Frankfurt/M. (DE)
(86) Internationale Anmeldenummer: PCT/EP2007/057869
(87) Internationale Veröffentlichungsnummer: WO 2008/017613

(56) Entgegenhaltungen:
- EP-A- 0 235 035
- WO-A-2004/022394
- WO-A-2006/024635
- DE-A1- 10 356 096
- DE-B3- 10 361 042

## Beschreibung

Die vorliegende Erfindung betrifft eine elektromechanisch betätigbare Feststellbremse für Kraftfahrzeuge mit mindestens einem elektromechanischen Aktuator, dessen Rotationsbewegung von einer Betätigungseinheit in eine Translationsbewegung umgesetzt wird und wenigstens ein Bremsglied derart verschiebt, dass mindestens ein mit dem Bremsglied verbundener Bremsbelag mit einer Feststellkraft gegen einen mit einem Kraftfahrzeugrad fest verbundenen Rotor gepresst wird, wobei beim Zuspannen und/oder Lösen der Feststellbremse, die Stromaufnahme des elektromechanischen Aktuators ermittelbar ist. Außerdem betrifft die Erfindung ein Verfahren zum Betrieb der elektromechanisch betätigbaren Feststellbremse.

Eine allgemeine Aufgabe vorbekannter Verfahren einer elektromechanisch betätigbaren Feststellbremse ist es, eine ausreichende Feststellkraft möglichst genau einzustellen. Für eine ausreichende Feststellkraft ist in der Regel mindestens ein Kraftniveau erforderlich, welches ausreicht, das Kraftfahrzeug mit zulässigem Gesamtgewicht an einem Hang mit 30% Steigung sicher und dauerhaft zu halten. Hierzu steht die Messgröße "Strom", mit dem der elektromechanische Aktuator betrieben wird als Strom/Zeit-Verlauf zur Verfügung. Stehen weitere Messgrößen wie zum Beispiel ein Drehgeberwert vom elektromechanischen Aktuator oder der zurückgelegte Stellweg zur Verfügung, so können diese Informationen zur Erhöhung der Stellgenauigkeit genutzt werden. Diese Zusatzinformationen stehen jedoch häufig nicht zur Verfügung, da diese Zusatzinformationen aufgrund der weiteren Sensoren, die für diese weiteren Messgrößen notwendig sind, zusätzliche Kosten verursachen.

Aus der DE 10 2004 60 454 A1 ist ein Verfahren und eine Vorrichtung zum Betätigen einer Feststellbremsanlage für Fahrzeuge, bekannt. Die Feststellbremsanlage weist eine elektromotorisch betätigbare Stelleinheit zum Feststellen oder Lösen der Feststellbremsanlage auf. Zum Feststellen ist eine definierte Feststellkraft vorgegeben und nichtflüchtig gespeichert. Beim Betätigen der Feststellbremsanlage gibt ein Stromsensor bei Erreichen einer definierten Stromstärke ein Signal ab. Dieses Signal dient zum Ansteuern der Feststellbremsanlage, also beispielsweise zum Abschalten des motorischen Antriebs, wenn ein vorbestimmter Stromwert erreicht wird, der einem bestimmten Wert der Feststellkraft entspricht. Problematisch bei einer derartigen Stromsteuerung ist, dass absolute Stromwerte ermittelt werden. Der absolute Stromwert, der einem bestimmten Wert der Feststellkraft entspricht ist jedoch stark von der Umgebungstemperatur abhängig, d.h. ein Stromwert, der bei einer Umgebungstemperatur von 20°C einer ausreichenden Feststellkraft entspricht, entspricht bei -10°C keineswegs einer ausreichenden Feststellkraft.

Aus der DE 103 61 042 B3 geht eine elektromechanisch betätigbare Feststellbremse sowie ein Verfahren zur Steuerung derselben hervor. Dabei ist keine Rede von einer Ermittlung einer Stromaufnahme und eine Kraftermittlung wird auch nicht vorgenommen. Vielmehr wird in Zusammenhang mit den herkömmlichen oder auch für die kraftsensorlosen Fahrzeugbremsen vorgeschlagen, dass eine Steuereinheit zum Erzielen einer vorbestimmten Zuspannkraft den Abschaltstrom in Abhängigkeit von einer Ereigniszahl eines gezählten Ereignisses variiert.

Es ist daher Aufgabe der vorliegenden Erfindung, eine Feststellbremsanlage der eingangs genannten Gattung und ein Verfahren zu deren Betrieb dahingehend zu verbessern, dass unabhängig von der Umgebungstemperatur ein sicherer Betrieb und ein zuverlässiges Einstellen der Feststellkraft lediglich auf Grundlage der ermittelten Stromaufnahme des elektromechanischen Aktuators ermöglicht wird.

Diese Aufgabe wird zusammen mit den kennzeichnenden Merkmalen vom Patentanspruch 1 erfindungsgemäß gelöst. Erfindungsgemäß sind Mittel vorgesehen, die die Stromaufnahme des elektromechanischen Aktuators derart verändern, dass vorab bestimmte Werte der Feststellkraft ermittelbar sind. Die Mittel sind dabei derart ausgebildet, dass sie eine signifikante Änderung der Stromaufnahme des elektromechanischen Aktuators beim Zuspannen oder beim Lösen der Feststellbremse bewirken, die auf einen vorab bestimmten Wert der Feststellkraft schließen lässt.Die Mittel sind durch mindestens ein vorgespanntes Federelement gebildet, das die Steifigkeit der Feststellbremse beeinflusst. Das mindestens eine Federelement ist bei einer bevorzugten Weiterbildung als vorgespanntes Tellerfederpaket im Kraftfluss der Feststellbremse oder als vorgespannte Drehfeder im Drehmomentenfluss der Feststellbremse ausgebildet.

Alternativ werden die Mittel durch mindestens eine Rutschkupplung gebildet. Bei einem erfindungegemäßen Verfahren wird die Stromaufnahme des elektromechanischen Aktuators beim Zuspannen und/oder Lösen der Feststellbremse dahingehend ausgewertet, dass vorab bestimmte Werte der Feststellkraft ermittelt werden.

Dabei ist vorgesehen, dass die Ermittlung der vorab bestimmten Werte durch Ermittlung von Wendepunkten im Signalverlauf der Stromaufnahme des elektromechanischen Aktuators erfolgt, die auf eine Bestimmung der eingestellten Feststellkraft und/oder auf eine Positionsbestimmung des Bremsglieds hin ausgewertet werden.

Bei einer bevorzugten Ausführungsform des erfindungsgemäßen Verfahrens wird die Steigung des Signalverlaufs der Stromaufnahme des elektromechanischen Aktuators ermittelt werden und auf eine Bestimmung der eingestellten Feststellkraft und/oder auf eine Positionsbestimmung des Bremsgliedes hin ausgewertet werden.

Bei einer vorteilhaften Weiterbildung des erfindungsgemäßen Verfahrens ist vorgesehen, dass der absolute Stromwert der Stromaufnahme des elektromechanischen Aktuators ermittelt wird und zur Plausibilisierung des ermittelten Feststellkraftwertes herangezogen wird.

Eine besonders vorteilhafte Weiterbildung des erfindungsgemäßen Verfahrens sieht vor, dass das Zuspannen und/oder Lösen der Feststellbremse in Phasen unterteilt wird, wobei die Stromaufnahme des elektromechanischen Aktuators zur Phasenerkennung ausgewertet wird.

Dabei wird das Zuspannen der Feststellbremse in eine Anlaufphase, eine Freilaufphase, eine Anlegephase, eine Zuspannphase und eine Sicherheitsphase unterteilt, während das Lösen der Feststellbremse in eine Anlaufphase, eine Rückstellphase, eine Lüftspielphase, eine Freilaufphase und eine Anschlagphase unterteilt.

Die Phasen werden mit Hilfe eines Modells bestimmt, dem ein Lernverfahren zugeführt wird, um Alterungs- und Verschleißprozesse zu berücksichtigen. In dem eben genannten Modell werden weitere Einflussparameter wie Umgebungstemperatur und die Temperatur des Rotors berücksichtigt und deren Einflüsse minimiert.

Die Erfindung wird nachfolgend anhand von zwei Ausführungsbeispielen im Zusammenhang mit der beiliegenden Zeichnung näher erläutert. In der Zeichnung zeigen:
- Fig. 1: eine schematische Darstellung einer elektromechanisch betätigbaren Feststellbremse für Kraftfahrzeuge,
- Fig. 2: ein Diagramm, das die Stromaufnahme des elektromechanischen Aktuators, die Feststellkraft und die Position des Bremsgliedes über der Zeit beim Zuspannen der Feststellbremse zeigt;
- Fig. 3a,b,c: Darstellungen der Phaseneinteilung der Stromaufnahme des elektromechanischen Aktuators, der Feststellkraft und der Drehzahl des elektromechanischen Aktuators beim Zuspannen der Feststellbremse und
- Fig. 4a,b,c: eine den Fig. 3a bis c entsprechende Darstellung beim Lösen der Feststellbremse.

Die vorliegende Erfindung umfasst sowohl elektromechanisch betätigbare Feststellbremsen, die auf eine Scheibenbremse wirken, wie auch Feststellbremsen, die auf eine Trommelbremse wirken. Entsprechend ist das erfindungsgemäße Verfahren auf diese unterschiedlichen Feststellbremsen anwendbar.

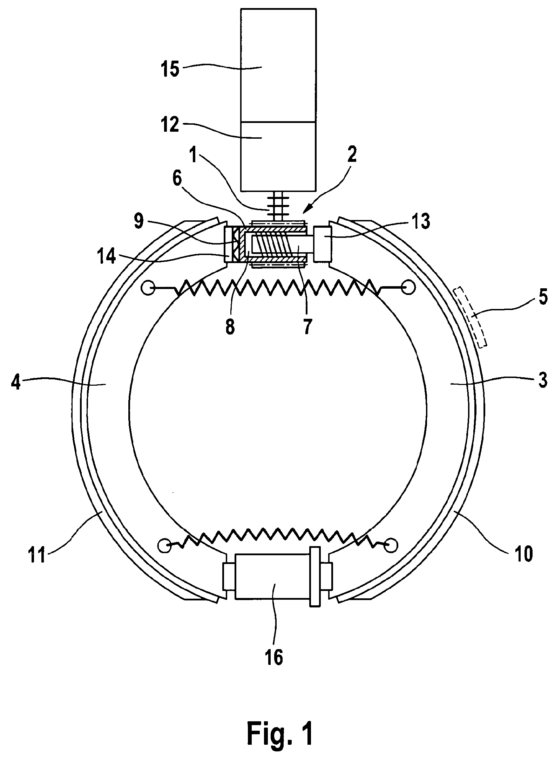

Anhand von Fig. 1 wird beispielhaft eine elektromechanisch betätigbare Feststellbremse beschrieben, die im Wesentlichen aus einer an sich bekannten Trommelbremse vom Typ "Duo-Servo", sowie einem elektromechanischen Aktuator 15 besteht. Die Trommelbremse vom Typ "Duo-Servo" weist eine lediglich teilweise dargestellte Bremstrommel 5, die als Rotor 5 fest mit einem Kraftfahrzeugrad verbunden ist, ein mit Bremsbelägen 10, 11 versehenes Paar von Bremsbacken 3, 4, die als Bremsglied wirken, und eine Betätigungseinheit 2 auf. Die Betätigungseinheit 2 ist als Spreizschloss 2 ausgebildet und setzt die Rotationsbewegung des elektromechanischen Aktuators 15 in eine Translationsbewegung um und kann die Bremsbeläge 10, 11 der Bremsbacken 3, 4 mit der Innenseite der Bremstrommel 5 in Eingriff bringen. Charakteristisch für die Trommelbremse vom Typ "Duo-Servo" ist eine frei bewegliche bzw. schwimmend gelagerte Abstützvorrichtung 16, die dem Spreizschloss 2 gegenüber liegt und zwischen den Bremsbacken 3, 4 angeordnet ist. Das eben erwähnte Spreizschloss 2 wird im Wesentlichen durch eine Gewindemutter-Spindel-Anordnung 8 und zwei Druckstücke 13, 14 gebildet, wobei das eine Druckstück 13 mit der Spindel 7 und das andere Druckstück 14 mit der Gewindemutter 6 zusammenwirkt. Wie in Fig. 1 verdeutlicht ist, wird die Gewindemutter-Spindel-Anordnung 8 von einem Schraubrad 1 betätigt, das vom elektromechanischen Aktuator 15 unter Zwischenschaltung eines lediglich schematisch dargestellten Untersetzungsgetriebes 12 angetrieben wird. Zu diesem Zweck weist die Gewindemutter 6 auf der äußeren Oberfläche eine Verzahnung auf, die parallel zur Achse der Gewindemutter 6 verläuft. Mit dieser Geradverzahnung der Gewindemutter 6 bildet das eben erwähnte Schraubrad 1 ein Schraubradgetriebe. Bei einer Betätigung des Schraubrads 1 durch den elektromechanischen Aktuator 15 wird die Gewindemutter 6 in eine Rotationsbewegung versetzt. Aufgrund dieser Rotationsbewegung der Gewindemutter 6 vollzieht die Spindel 7 der Gewindemutter-Spindel-Anordnung 8 eine Translationsbewegung und bringt die beiden Bremsbacken 3, 4 mit der gewünschten Feststellkraft mit der Bremstrommel 5 in Eingriff.

Um einen Feststellbremsvorgang durchführen zu können, ist entweder das Untersetzungsgetriebe 12 oder die Gewindemutter-Spindel-Anordnung 8 selbsthemmend ausgebildet. Durch diese Maßnahme verbleiben die Bremsbacken 3, 4 im stromlosen Zustand des elektromechanischen Aktuators 15 mit der Bremstrommel 5 in Eingriff.

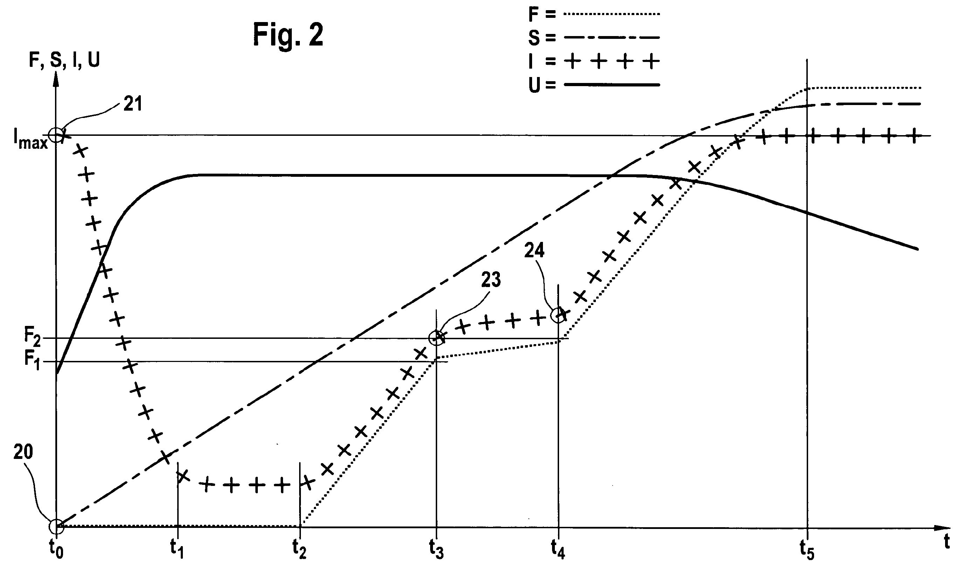

Sofern das Kraftfahrzeug an einem Hang abgestellt wird, erfolgt nach der Einstellung der gewünschten Zuspannkraft, eine geringfügige Bewegung des Kraftfahrzeugs in Richtung der Hangabtriebskraft. Dabei dreht sich auch die Bremstrommel 5 um einen bestimmten Winkelbetrag, bis der für eine Trommelbremse vom Typ "Duo-Servo" charakteristische Selbstverstärkungseffekt einsetzt. Als Folge wird jedoch die gewünschte Zuspannkraft reduziert. Aus diesem Grund ist vorgesehen, dass im Kraftfluss zwischen der Gewindemutter-Spindel-Anordnung 8 und dem mit der Gewindemutter 6 zusammenwirkenden Druckstück 14 ein Federelement 9 angeordnet ist, das die eben beschriebene Reduzierung der gewünschten Zuspannkraft kompensiert. Außerdem ist es möglich, dass ein Lösevorgang der Feststellbremse nicht durchgeführt werden kann, wenn eine Abkühlung der zuvor erhitzten Bremstrommel 5 eintritt. Bei dieser Abkühlung vollzieht die Bremstrommel 5 einen geringen Schrumpfvorgang, wonach sich die Zuspannkraft aufgrund der großen Steifigkeit der sich im Kraftfluss befindlichen Bauteile erhöht. In diesem Fall ist es möglich, dass der elektromechanische Aktuator 15 einen Lösevorgang der Feststellbremse nicht durchführen kann, da die Zuspannkraft zu groß ist und sich die sich im Kraftfluss befindlichen Bauteile verklemmt haben. Durch die eben erwähnte, in Fig. 1 dargestellte, Anordnung wird auch dieser Effekt verhindert. Gleichzeitig dient das Federelement dazu, die Stromaufnahme des elektromechanischen Aktuators derart zu verändern, dass vorab bestimmte Werte der Feststellkraft ermittelbar sind, wie nachfolgend anhand von Fig. 2 noch näher erläutert wird.

Wie eingangs bereits erwähnt, beziehen sich die Erfindung und das erfindungsgemäße Verfahren auch auf eine elektromechanisch betätigbare Feststellbremse, die auf eine Scheibenbremse wirkt. Dabei wird das Bremsglied durch einen Bremskolben gebildet, der von einer als Gewindemutter-SpindelEinheit ausgebildete Betätigungseinheit verschoben wird, wodurch ein mit dem Bremskolben verbundener Bremsbelag gegen die als Rotor wirkende Bremsscheibe gepresst wird.

In Fig. 2 ist ein charakteristischer Verlauf der Feststellkraft F, der Position S des Bremsgliedes bzw. der Bremsbacken 3, 4, der Stromaufnahme I und der Spannung U beim Zuspannen der Feststellbremse. Von diesen Messgrößen steht beim vorliegenden Verfahren lediglich die Stromaufnahme I zur Verfügung. Man muss nicht unbedingte Werte der Stromaufnahme I kennen - ein ungefährer Verlauf reicht für das vorliegende Verfahren aus. Um das vorliegende Verfahren besser zu erklären sind auch die anderen genannten Messgrößen, die beim Betrieb der elektromechanisch betätigbaren Feststellbremse nicht zur Verfügung stehen, auf der Ordinate aufgetragen, während auf der Abszisse die Zeit t dargestellt ist. Die Feststellkraft F ist gestrichelt dargestellt, die Position S der Bremsbacken 3, 4 ist strickpunktiert und die Stromaufnahme I des elektromechanischen Aktuators 15 ist durch eine Aneinanderreihung von "+"-Symbolen dargestellt. Die Spannungsversorgung U ist als durchgezogene Linie dargestellt.

Zu Beginn des in Fig. 2 dargestellten Zeitverlaufs befindet sich die Feststellbremse im gelösten Zustand, d.h. die Position der Bremsbacken 3, 4 beträgt "null" und die Feststellkraft beträgt ebenfalls "null", wie es bei Position 20 zum Zeitpunkt t₀ dargestellt ist. Position 21 zeigt, dass zu Beginn eines Zuspannvorgangs ein vergleichsweise hoher Anlaufstrom notwendig ist. Zum Zeitpunkt t₁ endet diese Anlaufphase und es schließt sich bis zum Zeitpunkt t₂ die so genannte Anlegephase an. Zum Zeitpunkt t₂ sind die Bremsbeläge 10, 11 zur Anlage an die Bremstrommel 5 gekommen und dementsprechend steigt beim weiteren verschieben bzw. spreizen der Bremsbacken 3, 4 die Feststellkraft F, wie es bei Position 23 dargestellt ist. Die Feststellkraft F steigt während der Zuspannphase bis zum Zeitpunkt t₃ mit einer ersten Steigung an. Nahezu parallel verläuft die Stromaufnahme I. Dann zum Zeitpunkt t₃ knickt die Steigung der Feststellkraft F ab und der Verlauf der Stromaufnahme I beschreibt bei der Position 23 einen Wendepunkt. Zu diesem Zeitpunkt t₃ ist die Feststellkraft so groß, dass das Federpaket 9 komprimiert wird. Da das Federpaket 9 vorgespannt ist, weiß man, wie groß die Feststellkraft F zum Zeitpunkt t₃ ist. Ist das Federpaket beispielsweise auf 2000 N vorgespannt, so beträgt die Feststellkraft F zum Zeitpunkt t₃ ebenfalls 2000 N. Die weitere Spreizung der Bremsbacken 3, 4 führt zu einer weiteren Kompression des Federpaketes 9. Die Feststellkraft F steigt zwischen den Zeitpunkten t₃ und t₄ nicht mehr so stark an, wie zwischen den Zeitpunkten t₂ und t₃, da die Feststellkraft vom Federpaket 9 absorbiert wird. Zum Zeitpunkt t₄ ist das Federpaket 9 vollständig komprimiert und auf Block gepresst. Die Stromaufnahme beschreibt zum Zeitpunkt t₄ einen Wendepunkt und folgt wiederum nahezu parallel der wiederum stark steigenden Feststellkraft F.

Zum Zeitpunkt t₅ hin erreicht die Stromaufnahme I den maximal zur Verfügung stehenden Stromwert Iₘₐₓ. Gleichzeit findet keine weitere Verschiebung bzw. Spreizung der Bremsbacken 3, 4 statt und die Position S der Bremsbacken 3, 4 verändert sich nach dem Zeitpunkt t₅ nicht mehr. Da die Bremsbacken 3, 4 nicht mehr weiter auseinander gespreizt werden, steigt die Feststellkraft F nach dem Zeitpunkt t₅ auch nicht mehr weiter an.

Entscheidend ist, dass durch das Federpaket 9 die Stromaufnahme I des elektromechanischen Aktuators 15 so verändert wird, dass vorab bestimmte Werte der Feststellkraft, nämlich der Kraftwert auf den das Federpaket 9 vorgespannt ist sowie der Kraftwert, der notwendig ist, um das Federpaket 9 auf Block zu pressen, ermittelbar sind. Diese signifikanten Änderungen an den Positionen 23 und 24 sind in der Stromaufnahme des elektromechanischen Aktuators ermittelbar.

Die eben beschriebene signifikante Änderung der Stromaufnahme des elektromechanischen Aktuators 15 wird im beschriebenen Ausführungsbeispiel durch das vorgespannte Tellerfederpaket 9 bewirkt. Dieses Tellerfederpaket 9 befindet sich im Kraftfluss der Feststellbremse und beeinflusst die Steifigkeit der gesamten Feststellbremse. Eine vorgespannte Drehfeder, die im Drehmomentenfluss der Feststellbremse angeordnet ist, ist ebenfalls dazu geeignet die beschriebene Veränderung der Stromaufnahme des elektromechanischen Aktuators 15 zu bewirken.

Eine weitere Möglichkeit, eine signifikante Änderung der Stromaufnahme des elektromechanischen Aktuators 15 zu erreichen, ist die gezielte Beeinflussung des Bauteilsteifigkeitsverlaufes z.B. durch Schwächung von Querschnitten derart, dass bei definierter Lasthöhe ein vergrößerter Querschnitt in den Kraftfluss gelangt und damit die Steifigkeit schlagartig ansteigt. Alternativ oder zusätzlich ist die Verwendung einer Rutschkupplung denkbar, die eine maximal Feststellkraft vorgibt, bevor die Rutschkupplung rutscht. Ein Verfahren zur Erkennung des Betriebs einer Rutschkupplung ist aus der WO2006/024635 bekannt.

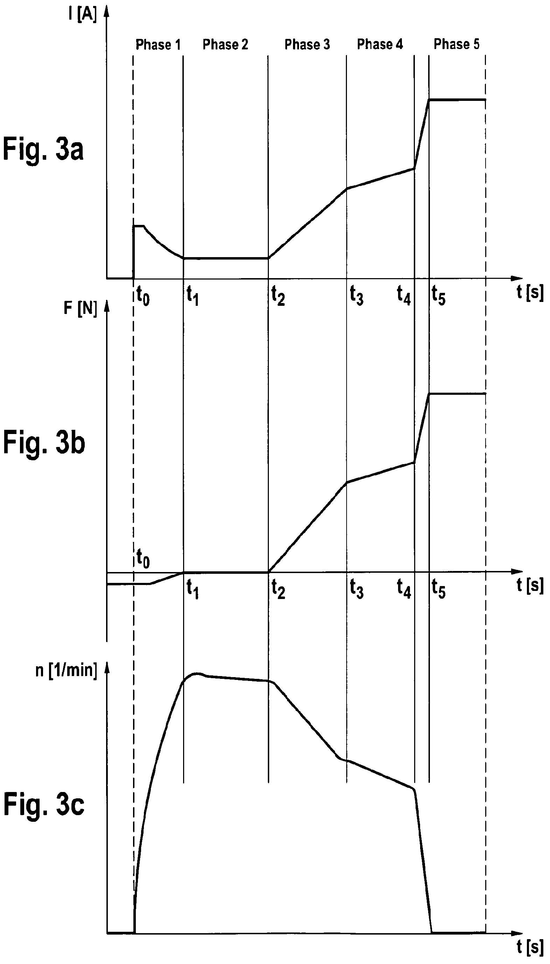

Die Ermittlung der Positionen 23 und 24 in der Stromaufnahme, die vorab ermittelten Werten der Feststellkraft bzw. einer bestimmten Position der Bremsbacken 3, 4 entspricht, erfolgt durch die Ermittlung dieser Wendepunkte 23, 24 im Signalverlauf. Die unterschiedliche Steigung des Signalverlaufs zwischen den Zeitpunkten t₂ und t₃, zwischen t₃ und t₄ und t₄ und t₅ wird ebenfalls ermittelt und zur Bestimmung der eingestellten Feststellkraft F herangezogen. Zur Plausibilisierung wird der absolute Stromwert gemessen und mit vorab ermittelten Werten verglichen. In diesem Zusammenhang ist eine Unterteilung der Stromaufnahme in Phasen sinnvoll, wobei anschließend eine Phasenerkennung durchgeführt wird, wie anhand der Fig. 3a bis 3c näher erläutert wird.

Fig. 3a stellt die anhand von Fig. 2 beschriebenen Stromaufnahme des elektromechanischen Aktuators 15 dar, während Fig. 3b die eingestellte Feststellkraft darstellt. Fig. 3c stellt die Anzahl der Umdrehungen des elektromechanischen Aktuators dar. Das Zuspannen der Feststellbremse wird in eine Anlaufphase (Phase 1), eine Freilaufphase (Phase 2), eine Anlegephase (Phase 3), eine Zuspannphase (Phase 4) und eine Sicherheitsphase (Phase 5) unterteilt. Bei der Anlaufphase/Phase 1 läuft der elektromechanische Aktuator 15 an. Wird in dieser Phase immer weniger Strom aufgenommen, d.h. existiert eine negative Steigung, aber keine konstante Stromaufnahme, dann liegt noch keine Feststellkraft an. Die Feststellkraft ist an den Druckstücken 13, 14 gleich Null. Wird die Anlaufphase/Phase 1 erkannt und bleibt eine vergleichsweise geringe Stromaufnahme für gewisse Zeit konstant, dann wird die als Phase 2 bezeichnete Freilaufphase erkannt. Es liegt immer noch keine oder nur eine geringe Feststellkraft an.

Übersteigt die Stromaufnahme des elektromechanischen Aktuators 15 in der Freilaufphase/Phase 2 eine gewisse Schwelle und steigt leicht an, zum Beispiel stetig mit relativ niedrige Steigung, dann wird die Anlegephase erkannt, die als Phase 3 gekennzeichnet ist. Die Zuspannphase ist mit Phase 4 bezeichnet und wird erkannt, wenn die Stromaufnahme in der Anlegephase/Phase 3 linear noch stärker ansteigt. Das Federelement sorgt in der Zuspannphase/Phase 4 für unterschiedlich stärkere Steigungen mit Berücksichtigung der Knickpunkte. Der Strom- und Kraftverlauf in der Zuspannphase/Phase 4 sind von der Auslegung des eingesetzten Federelementes abhängig und können eine abweichende Gestalt annehmen. Anschließend wird die als Phase 5 bezeichnete Sicherheitsphase und die maximal eingestellte Stromaufnahme erreicht, die zur Sicherung der in der Zuspannphase/Phase 4 erreichten Spannkraft dient. Der konstante Stromverlauf in der Sicherheitsphase 5 ist durch eine Strombegrenzung bedingt.

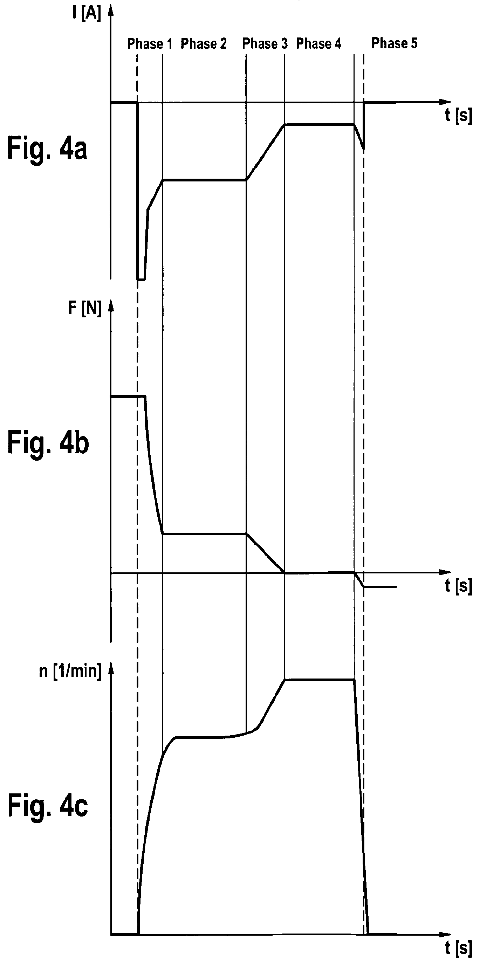

Fig. 4a bis c zeigen entsprechend einen Lösevorgang der elektromechanisch betätigbaren Feststellbremse. Das Lösen der Feststellbremse wird in eine Anlaufphase (Phase 1), eine Rückstellphase (Phase 2), eine Lüftspielphase (Phase 3), eine Freilaufphase (Phase 4) und eine Anschlagphase (Phase 5) unterteilt.

Es sind während eines Zuspann- und Lösevorganges jeweils 5 Phasen zu durchfahren. Die Phase 5, die Anschlagphase, während eines Lösevorganges ist sehr wichtig, um eindeutig zu erkennen, dass die Feststellbremse vollständig gelöst hat. Der Nachteil dabei ist, dass die zum Zuspannen benötigte Zeit dadurch länger wird und auch die Haltbarkeit des elektromechanischen Aktuators 15 sowie anderer Teile größer sein muss. Daher ist vorgesehen, dass der elektromechanische Aktuator 15 nach gewisser Zeit während der Phase 4, der Freilaufphase, abgeschaltet wird. Die Abschaltzeit ist von vielen Parametern abhängig, unter Berücksichtigung der Zeitintervalle der Phasen des letzten Zuspannvorgangs wie z.B. die Überwindungszeit des Lüftspiels bei dem letzten Zuspannvorgang.

Die Phase 5 in einem Lösevorgang soll gesetzt werden, wenn ein vollständiges Lösen der Bremse nicht eindeutig ist, oder zum Lernen der Lüftspielzeit z.B. nach bestimmter Betätigungsanzahl. Um die Zuspannzeit trotz Phase 5 während eines Lösevorgangs zu verkürzen, wird der elektromechanische Aktuator 15 nach Ende der Phase 5 kurz vorgefahren, d.h. kurz in der Gegenrichtung angesteuert.

Der elektromechanische Aktuator 15 wird bei einem Lösevorgang ohne Phase 5 nicht bis zum Anschlag gefahren und daher ist die Kraft des elektromechanischen Aktuators kurz vor Ende der Phase 4 null.

Während einer Systementwicklung werden neben der Messung der Stromaufnahme des elektromechanischen Aktuators 15 auch die Feststellkraft gemäß den Fig. 3b und 4b sowie die Drehzahl des elektromechanischen Aktuators 15 gemäß den Fig. 3c und 4c gemessen. Dadurch werden Kennlinien der Stromaufnahme, der Feststellkraft und der Drehzahl gespeichert, die zur Bestimmung der eingestellten Feststellkraft und zur Positionsbestimmung der Bremsbacken 3, 4 dienen. Aus den Kennlinien der Stromaufnahme, der Feststellkraft und der Drehzahl wird ein Gesamtmodell erstellt, das die momentane angelegte Feststellkraft bzw. die Position des Bremsglieds während einem Zuspann- bzw. Lösevorgang abschätzt und das Ende eines Vorganges, das heißt ob die Feststellbremse zugespannt oder gelöst ist, eindeutig erkennt.

Dieses Gesamtmodell berücksichtigt die Einflussparameter wie Rotortemperatur, Außentemperatur, Lastkollektiv, Spannungsversorgung, in dem beispielsweise Strom-Feststellkraft-Drehzahl-Kennlinien unter verschiedenen, äußeren Bedingungen aufgezeichnet werden.

### Bezugszeichenliste

- 1: Schraubrad
- 2: Betätigungseinheit/Spreizschloss
- 3: Bremsbacke/Bremsglied
- 4: Bremsbacke/Bremsglied
- 5: Bremstrommel/Rotor
- 6: Gewindemutter
- 7: Spindel
- 8: Gewindemutter-Spindeleinheit
- 9: Federelement
- 10: Bremsbelag
- 11: Bremsbelag
- 12: Untersetzungsgetriebe
- 13: Druckstück
- 14: Druckstück
- 15: Elektromechanischer Aktuator
- 16: Abstützvorrichtung

## Patentansprüche

1. Elektromechanisch betätigbare Feststellbremse für Kraftfahrzeuge mit mindestens einem elektromechanischen Aktuator (15), dessen Rotationsbewegung von einer Betätigungseinheit (2) in eine Translationsbewegung umgesetzt wird und wenigstens ein Bremsglied (3, 4) derart verschiebt, dass mindestens ein mit dem Bremsglied (3, 4) verbundener Bremsbelag (10, 11) mit einer Feststellkraft gegen einen mit einem Kraftfahrzeugrad fest verbundenen Rotor (5) gepresst wird, wobei beim Zuspannen und/oder Lösen der Feststellbremse, die Stromaufnahme des elektromechanischen Aktuators (15) ermittelt wird, **dadurch gekennzeichnet, dass** Mittel (9) vorgesehen sind, die die Stromaufnahme des elektromechanischen Aktuators (15) derart verändern, dass vorab bestimmte Werte der Feststellkraft ermittelt werden, die Mittel (9) derart ausgebildet sind, dass sie eine signifikante Änderung der Stromaufnahme des elektromechanischen Aktuators (15) beim Zuspannen oder beim Lösen der Feststellbremse bewirken, so dass auf einen vorab bestimmten Wert der Feststellkraft geschlossen wird, und wobei die Mittel (9) durch mindestens ein vorgespanntes Federelement (9) gebildet werden, das die Steifigkeit der Feststellbremse beeinflusst.

2. Elektromechanisch betätigbare Feststellbremse nach Anspruch 1, **dadurch gekennzeichnet, dass** das mindestens eine Federelement (9) als vorgespanntes Tellerfederpaket im Kraftfluss der Feststellbremse oder als vorgespannte Drehfeder im Drehmomentenfluss der Feststellbremse ausgebildet ist.

3. Elektromechanisch betätigbare Feststellbremse nach Anspruch 1, **dadurch gekennzeichnet, dass** die Mittel durch mindestens eine Rutschkupplung gebildet werden

4. Verfahren zum Betrieb einer elektromechanisch betätigbaren Feststellbremse für Kraftfahrzeuge nach Anspruch 1 mit mindestens einem elektromechanischen Aktuator (15), dessen Rotationsbewegung von einer Betätigungseinheit (2) in eine Translationsbewegung umgesetzt wird und wenigstens ein Bremsglied (3, 4) derart verschiebt, dass mindestens ein mit dem Bremsglied (3, 4) verbundener Bremsbelag (10, 11) mit einer Feststellkraft gegen einen mit einem Kraftfahrzeugrad fest verbundenen Rotor (5) gepresst wird, wobei beim Zuspannen und/oder Lösen der Feststellbremse, die Stromaufnahme des elektromechanischen Aktuators (15) ermittelt wird, **dadurch gekennzeichnet, dass** die Stromaufnahme des elektromechanischen Aktuators (15) beim Zuspannen und/oder Lösen der Feststellbremse dahingehend ausgewertet wird, dass vorab bestimmte Werte der Feststellkraft ermittelt werden.

5. Verfahren nach Anspruch 4, **dadurch gekennzeichnet, dass** die Ermittlung der vorab bestimmten Werte durch Ermittlung von Wendepunkten (23, 24) im Signalverlauf der Stromaufnahme des elektromechanischen Aktuators (15) erfolgt, die auf eine Bestimmung der eingestellten Feststellkraft hin und/oder zur Positionsbestimmung des Bremsglieds (3, 4)ausgewertet werden.

6. Verfahren nach Anspruch 5, **dadurch gekennzeichnet, dass** die Steigung des Signalverlaufs der Stromaufnahme des elektromechanischen Aktuators (15) ermittelt werden und auf eine Bestimmung der eingestellten Feststellkraft und/oder auf eine Positionsbestimmung des Bremsgliedes (3, 4) hin ausgewertet werden.

7. Verfahren nach einem der Ansprüche 4 bis 5, **dadurch gekennzeichnet, dass** der absolute Stromwert der Stromaufnahme des elektromechanischen Aktuators (15) ermittelt wird und zur Plausibilisierung des ermittelten Feststellkraftwertes herangezogen wird.

8. Verfahren nach einem der Ansprüche 4 bis 7, **dadurch gekennzeichnet, dass** das Zuspannen und/oder Lösen der Feststellbremse in Phasen unterteilt wird, wobei die Stromaufnahme des elektromechanischen Aktuators (15) zur Phasenerkennung ausgewertet wird.

9. Verfahren nach Anspruch 8, **dadurch gekennzeichnet, dass** das Zuspannen der Feststellbremse in eine Anlaufphase (Phase 1), eine Freilaufphase (Phase 2), eine Anlegephase (Phase 3), eine Zuspannphase (Phase 4) und eine Sicherheitsphase (Phase 5) unterteilt wird, während das Lösen der Feststellbremse in eine Anlaufphase (Phase 1), eine Rückstellphase (Phase 2), eine Lüftspielphase (Phase 3), eine Freilaufphase (Phase 4) und eine Anschlagphase (Phase 5) unterteilt wird.

10. Verfahren nach Anspruch 9, **dadurch gekennzeichnet, dass** die Phasen mit Hilfe eines Modells bestimmt werden, dem ein Lernverfahren zugeführt wird, um Alterungs- und Verschleißprozesse zu berücksichtigen.

## Claims

1. Electromechanically actuable parking brake for motor vehicles having at least one electromechanical actuator (15) whose rotational movement is converted into a translational movement by an actuating unit (2), and which moves at least one brake element (3, 4) in such a way that at least one brake lining (10, 11) which is connected to the brake element (3, 4) is pressed with a locking force against a rotor (5) which is permanently connected to a motor vehicle wheel, wherein the current consumption of the electromechanical actuator (15) when the parking brake is engaged and/or released is acquired, **characterized in that** means (9) are provided which change the current consumption of the electromechanical actuator (15) in such a way that values of the locking force which are determined in advance are acquired, the means (9) are embodied in such a way that they bring about a significant change in the current consumption of the electromechanical actuator (15) when the parking brake is engaged or released, so that a value of the locking force which was determined in advance is inferred, and wherein the means (9) are formed by at least one prestressed spring element (9) which influences the rigidity of the parking brake.

2. Electromechanically actuable parking brake according to Claim 1, **characterized in that** the at least one spring element (9) is embodied as a prestressed disk spring package in the force flux of the parking brake or as a prestressed torsion spring in the torque flux of the parking brake.

3. Electromechanically actuable parking brake according to Claim 1, **characterized in that** the means are formed by at least one slip clutch.

4. Method for operating an electromechanically actuable parking brake for motor vehicles according to Claim 1 having at least one electromechanical actuator (15) whose rotational movement is converted into a translational movement by an actuating unit (2), and which moves at least one brake element (3, 4) in such a way that at least one brake lining (10, 11) which is connected to the brake element (3, 4) is pressed with a locking force against a rotor (5) which is permanently connected to a motor vehicle wheel, wherein the current consumption of the electromechanical actuator (15) when the parking brake is engaged and/or released is acquired, **characterized in that** the current consumption of the electromechanical actuator (15) when the parking brake is engaged and/or released is evaluated, to the effect that the values of the locking force which have been determined in advance are acquired.

5. Method according to Claim 4, **characterized in that** the values which are determined in advance are acquired by acquiring turning points (23, 24) in the signal profile of the current consumption of the electromechanical actuator (15), which turning points (3, 4) are evaluated in order to determine the set locking force and/or in order to determine the position of the brake element (3, 4).

6. Method according to Claim 5, **characterized in that** the positive gradient of the signal profile of the current consumption of the electromechanical actuator (15) is acquired and evaluated in order to determine the set locking force and/or in order to determine the position of the brake element (3, 4).

7. Method according to one of Claims 4 to 5, **characterized in that** the absolute current value of the current consumption of the electromechanical actuator (15) is acquired and is used to check the plausibility of the acquired locking force value.

8. Method according to one of Claims 4 to 7, **characterized in that** the engagement and/or release of the parking brake is divided into phases, wherein the current consumption of the electromechanical actuator (15) is evaluated for the purpose of phase detection.

9. Method according to Claim 8, **characterized in that** the engagement of the parking brake is divided into a running up (phase 1), a free running (phase 2), an application phase (3), an engagement phase (4) and a security phase (phase 5), while the release of the parking brake is divided into a running up (phase 1), a resetting phase (phase 2), a running clearance phase (phase 3), a free running phase (phase 4) and a stop phase (phase 5).

10. Method according to Claim 9, **characterized in that** the phases are determined using a model to which a learning procedure is fed in order to take into account ageing processes and wear processes.

## Revendications

1. Frein à main actionnable de manière électromécanique pour véhicule à moteur comportant au moins un actionneur électromécanique (15) dont le mouvement de rotation est converti par une unité d'actionnement (2) en un mouvement de translation et déplace au moins un membre de freinage (3, 4) de manière à ce qu'au moins une garniture de frein (10, 11) reliée au membre de freinage (3, 4) soit comprimée avec une force d'arrêt contre un rotor (5) fermement relié à une roue du véhicule, dans lequel l'absorption de courant de l'actionneur électromécanique (15) est déterminée lors du serrage et/ou du desserrage du frein à main,
**caractérisé en ce qu'**il est prévu des moyens (9) qui modifient l'absorption de courant de l'actionneur électromécanique (15) afin de déterminer des valeurs prédéfinies de la force d'arrêt, **en ce que** les moyens (9) sont conçus de manière à provoquer une modification notable de l'absorption de courant de l'actionneur électromécanique (15) lors du serrage ou du desserrage du frein à main, qui révèle une valeur prédéfinie de la force d'arrêt, et dans lequel les moyens (9) sont formés par au moins un élément à ressort précontraint (9) qui agit sur la rigidité du frein à main.

2. Frein à main actionnable de manière électromécanique selon la revendication 1, **caractérisé en ce que** l'au moins un élément à ressort (9) est réalisé sous la forme d'un paquet de rondelles-ressorts précontraint dans le flux de force du frein à main ou sous la forme d'un ressort de torsion précontraint dans le flux de couple du frein à main.

3. Frein à main actionnable de manière électromécanique selon la revendication 1, **caractérisé en ce que** les moyens sont formés par au moins un embrayage à friction.

4. Procédé de mise en fonctionnement d'un frein à main actionnable de manière électromécanique pour véhicule à moteur selon la revendication 1, comportant au moins un actionneur électromécanique (15) dont le mouvement de rotation est converti par une unité d'actionnement (2) en un mouvement de translation et déplace au moins un membre de freinage (3, 4) de manière à ce qu'au moins une garniture de frein (10, 11) reliée au membre de freinage (3, 4) soit comprimée avec une force d'arrêt contre un rotor (5) fermement relié à une roue du véhicule, dans lequel l'absorption de courant de l'actionneur électromécanique (15) est déterminée lors du serrage et/ou du desserrage du frein à main,
**caractérisé en ce que** l'absorption de courant de l'actionneur électromécanique (15) est évaluée lors du serrage et/ou du desserrage du frein à main afin de déterminer la valeur prédéfinie de la force d'arrêt.

5. Procédé selon la revendication 4, **caractérisé en ce que** la détermination de la valeur prédéfinie est effectuée en déterminant des points d'inflexion (23, 24) dans la forme d'onde de l'absorption de courant de l'actionneur électromécanique (15), qui sont évalués à des fins de détermination de la force d'arrêt établie et/ou pour déterminer la position du membre de freinage (3, 4).

6. Procédé selon la revendication 5, **caractérisé en ce que** la croissance de la forme d'onde de l'absorption de courant de l'actionneur électromécanique (15) est déterminée et est évaluée à des fins de détermination de la force d'arrêt établie et/ou d'une détermination de position du membre de freinage (3, 4).

7. Procédé selon l'une quelconque des revendications 4 à 5, **caractérisé en ce que** la valeur de courant absolue de l'absorption de courant de l'actionneur électromécanique (15) est déterminée et est prise en compte dans le but de rendre plausible la valeur de la force d'arrêt.

8. Procédé selon l'une quelconque des revendications 4 à 7, **caractérisé en ce que** le serrage et/ou le desserrage du frein à main est divisé en plusieurs phases, dans lequel l'absorption de courant de l'actionneur électromécanique (15) est évaluée pour identifier les phases.

9. Procédé selon la revendication 8, **caractérisé en ce que** le serrage du frein à main est divisé en une phase initiale (phase 1), une phase de roue libre (phase 2), une phase d'application (phase 3), une phase de serrage (phase 4) et une phase de sécurité (phase 5), alors que le desserrage du frein à main est divisé en une phase initiale (phase 1), une phase de rappel (phase 2), une phase de jeu (phase 3), une phase de roue libre (phase 4) et une phase de butée (phase 5).

10. Procédé selon la revendication 9, **caractérisé en ce que** les phases sont déterminées à l'aide d'un modèle auquel est appliqué un procédé d'apprentissage afin de prendre en compte des processus de modification et d'usure.
